# EUROPEAN PATENT APPLICATION

(11) **EP 1 579 894 A2**
(43) Date of publication of application: **28.09.2005**
(21) Application number: 05003767.0
(22) Date of filing: 22.02.2005
(51) Int. Cl.: A63F 13/04, A63F 13/08

(54) **Gaming machine**

(30) Priority: 23.02.2004 JP 2004047115
(71) Applicant: Aruze Corp., Tokyo 135-0063 (JP)
(72) Inventor: Matsuno, Masaki, Tokyo 135-0063 (JP); Ohmori, Hiroyoshi, Tokyo 135-0063 (JP); Masuko, Takashi, Tokyo 135-0063 (JP)
(74) Representative: Grünecker, Kinkeldey, Stockmair & Schwanhäusser Anwaltssozietät

(57) **Abstract**

It is disclosed the gaming machine 500 provided with the DLP (Digital Liquid crystal Projector) 602 for projecting an image, the transparent screen 503 on which the image projected by the DLP 602 is focused, the DVC (Digital Video Camera) 603 for taking the rear plane image of the transparent screen 503 and outputting the image data obtained by taking the rear plane image of the transparent screen 503, the position detection portion 703 for processing the rear plane image data and detecting the position indicated by the indication portion P and outputting the position information and game control portion 702 for receiving the position information from the position detection portion 701 and controlling the gaming machine 500 based on the position information.

## Description

### BACKGROUND OF THE INVENTION

### 1. Field of the Invention

The present invention relates to a gaming machine, in particular to a gaming machine in which an image is displayed on an image-formation device such as a screen and when a user indicates a position where the image is displayed, progress of a game is controlled by detecting the position.

### 2. Description of Related Art

Conventionally, as a gaming machine installed in a game arcade or playground, it is proposed a gaming machine with a monitor display, in which a poker table or a betting board is displayed on the monitor display and a game is provided to a user. For example, in Unexamined Japanese Publication No. 2003-325726, it is proposed a roulette gaming machine having a roulette wheel and a monitor display such as a liquid crystal display or a CRT monitor, on which a betting table including numbers and the like to which the user bets is displayed.

However, in a case that the monitor display is utilized as the table for games, players participating in games have to see the monitor display at the same time and operate each of terminal devices to control games. Therefore, according that a number of the players becomes more and more, a size of the monitor display should be made larger and larger. Here, in a case that the monitor display such as the liquid crystal display or the CRT monitor is utilized, if the size of the monitor display becomes a big size (for example 50 - 60 inches size), weight of the monitor display itself increases. Due to this, there will occur various problems that the monitor display will bend due to the heavy weight thereof and that it should be dissolved increase of calorific power occurring in the monitor display due to that the size thereof becomes big.

### SUMMARY OF THE INVENTION

The present invention has been done and has an object to provide a gaming machine in which a big display can be utilized.

In order to accomplish the above object, according to one aspect of the present invention, it is provided a gaming machine:
a projector for projecting an image;
a screen on which the image projected by the projector is focused;
an instruction acceptance device for accepting an instruction; and
controller for controlling progress of a game based on the instruction accepted by the instruction acceptance device.

According to the gaming machine of the present invention, after the instruction is accepted by the instruction acceptance device, the controller controls progress of the game based on the instruction accepted by the instruction acceptance device. Therefore, in a case that the instruction is conducted based on that a player indicates the image projected on the screen by a part of a player's body or an indication portion, the game can be progressed according to such instruction.

According to the present invention, it can be provided the gaming machine in which, since the image is only projected on the screen by the projector, the screen does not bend with its weight and produce calorific power when driven and consume electric power, in comparison with the gaming machine utilizing the liquid crystal display or the CRT monitor.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

### BRIEF DESCRIPTION OF THE DRAWINGS

The accompanying drawings, which are incorporated in and constitute a part of this specification illustrate embodiments of the invention and, together with the description, serve to explain the objects, advantages and principles of the invention.

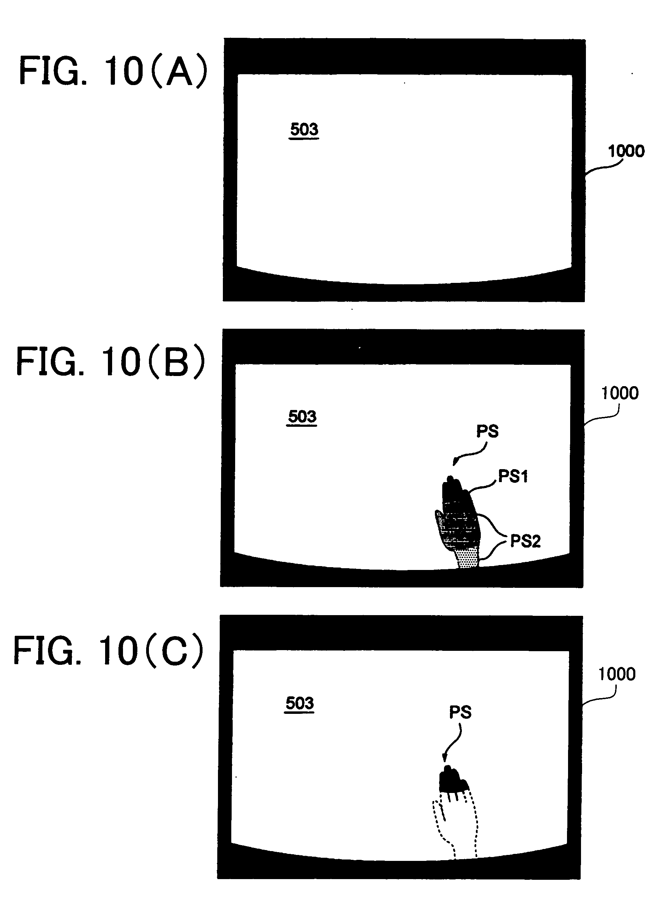

In the drawings,
Fig. 1 is an explanatory view showing a basic construction of an image display system according to the first system embodiment of the present invention,
Fig. 2 is an explanatory view showing a basic construction of an image display system which is constructed by modifying the image display system of the first system embodiment,
Fig. 3 is an explanatory view showing a basic construction of an image display system according to the second system embodiment of the present invention,
Fig. 4 is an explanatory view showing a basic construction of an image display system according to the third system embodiment of the present invention,
Fig. 5 is a perspective view showing a gaming machine utilizing the image display system according to the first gaming machine embodiment,
Fig. 6 is a schematic view showing an optical system constructing the gaming machine according to the first gaming machine embodiment,
Fig. 7 is a block diagram showing an electrical construction of the gaming machine according to the first gaming machine embodiment,
Fig. 8 is an image example displayed on a front display,
Fig. 9 is an image example displayed on a transparent screen of the gaming machine,
Fig, 10 is an explanatory views showing image examples displayed on the transparent screen and Fig. 10 (A) shows an image of a rear plane in the transparent screen, Fig. 10 (B) shows an image of the rear plane in the transparent screen, the image including a shadow, and Fig. 10 (C) shows an image after a binarization process of image data of the image shown in Fig. 10 (B) is done,

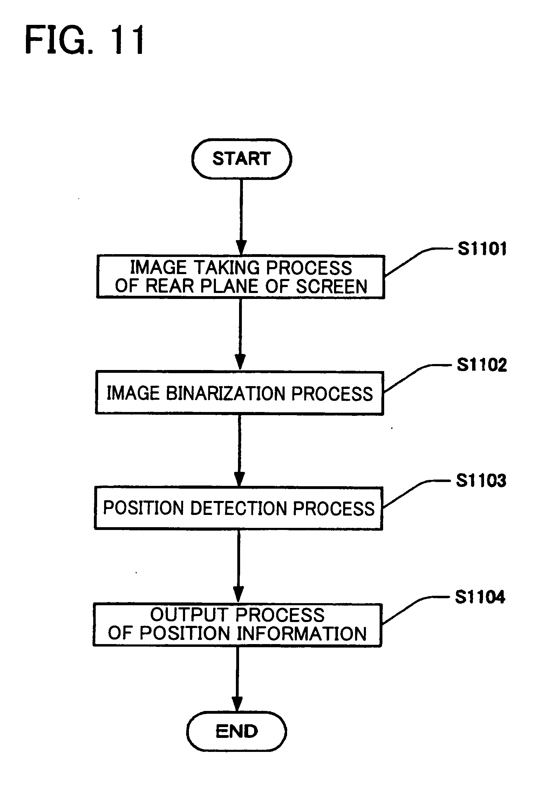

Fig. 11 is a flowchart of the position detection process in which the position detection of the indication portion P is done by utilizing the rear plane image data,

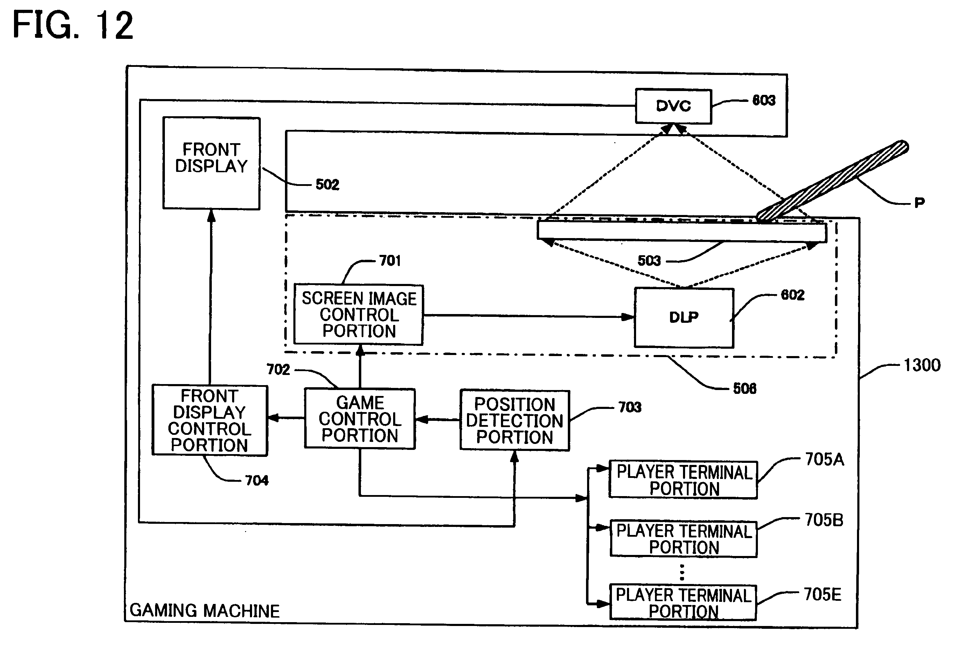

Fig. 12 is a block diagram showing an electrical construction of the gaming machine according to the modification of the first gaming machine embodiment,

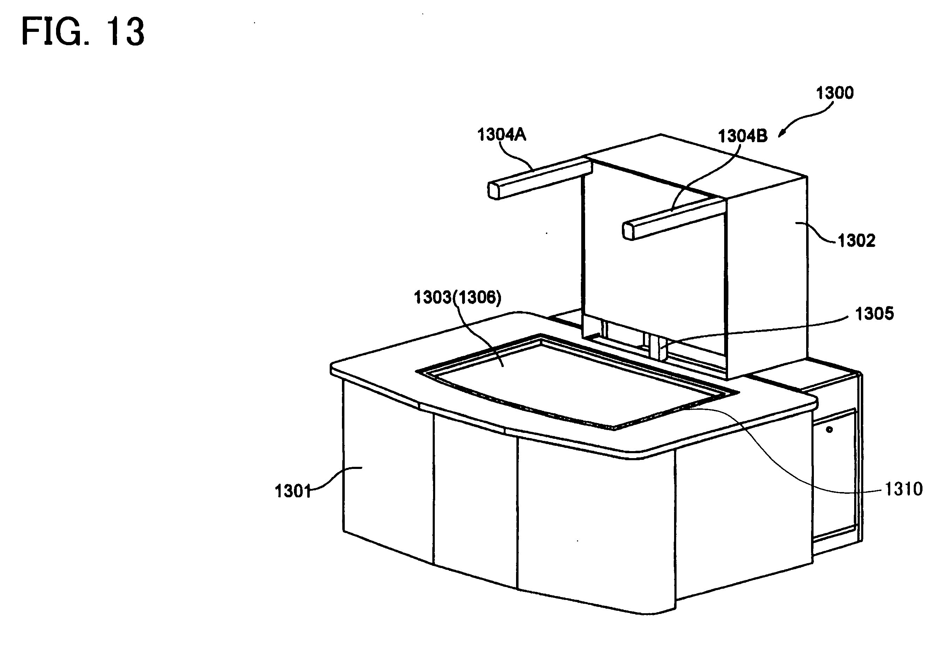

Fig. 13 is a perspective view showing a gaming machine utilizing the image display system according to the second gaming machine embodiment,

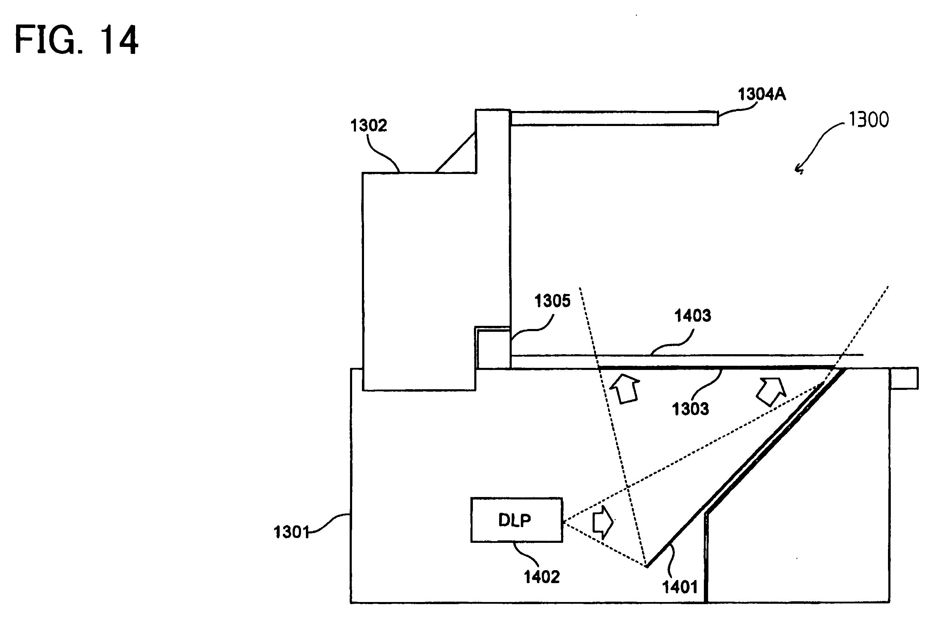

Fig. 14 is a schematic view showing an optical system constructing the gaming machine according to the second gaming machine embodiment,

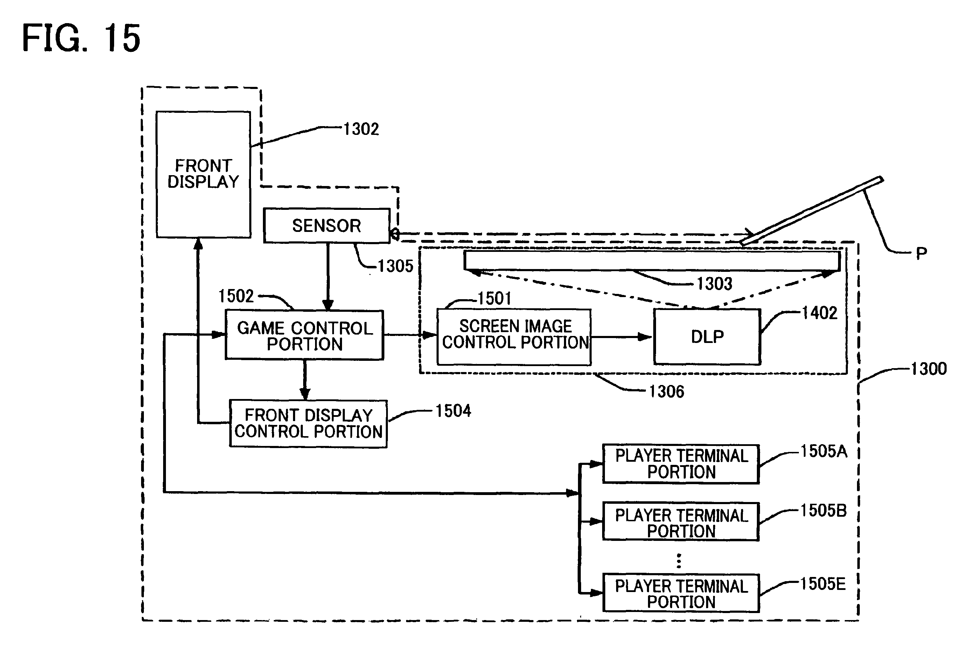

Fig. 15 is a block diagram showing an electrical construction of the gaming machine according to the second gaming machine embodiment,

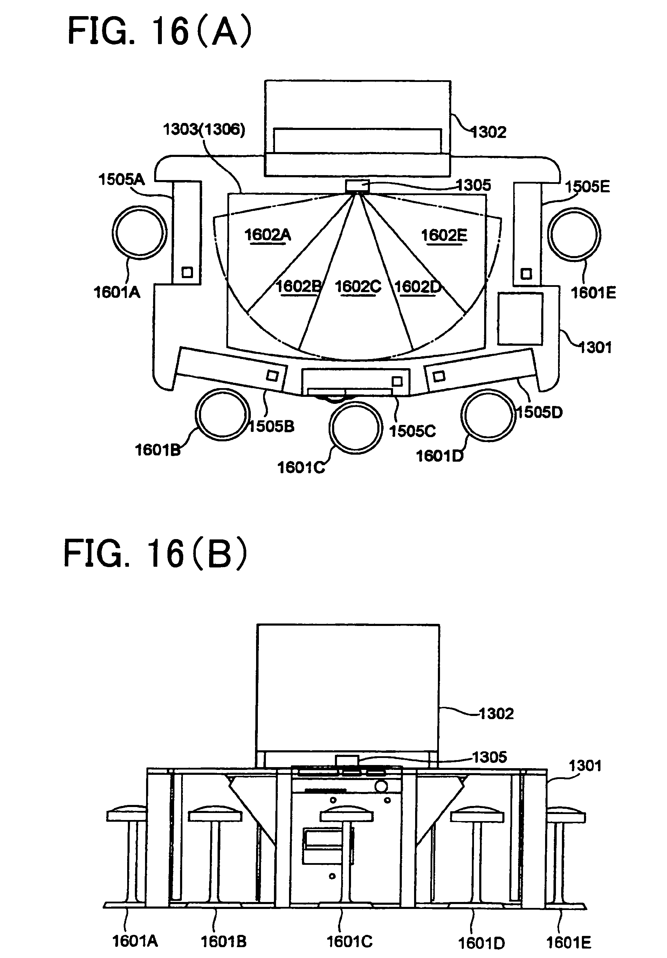

Fig. 16 is an explanatory view of the gaming machine and Fig. 16 (A) is a plan view of the gaming machine, in which a scanning range of a sensor is shown and Fig. 16 (B) is a front view of the gaming machine,

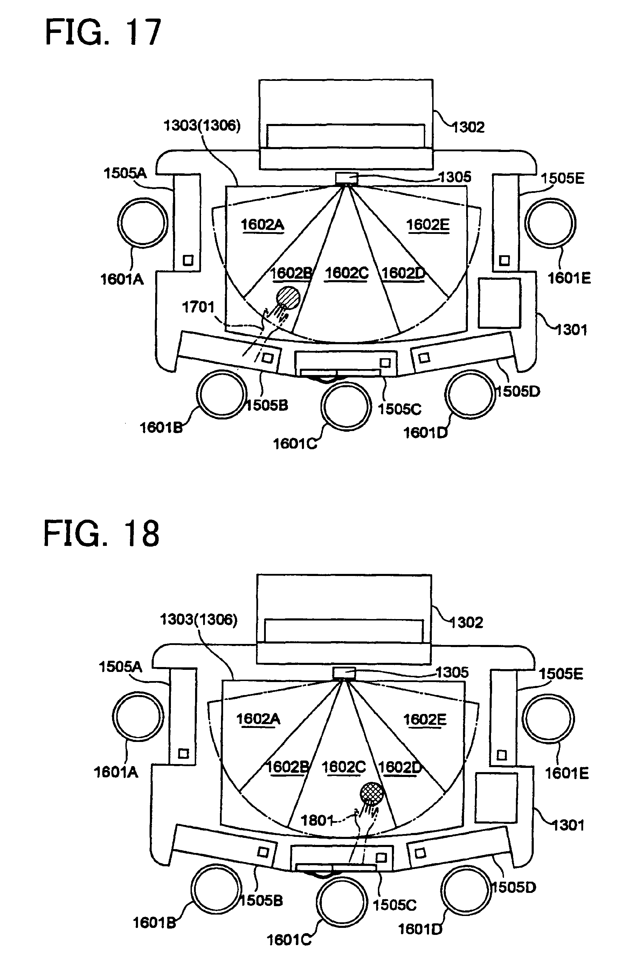

Fig. 17 is a plan view of the gaming machine showing a scanning range of the sensor when a player is specified,
Fig. 18 is a plan view of the gaming machine showing a scanning range of the sensor when another player is specified,

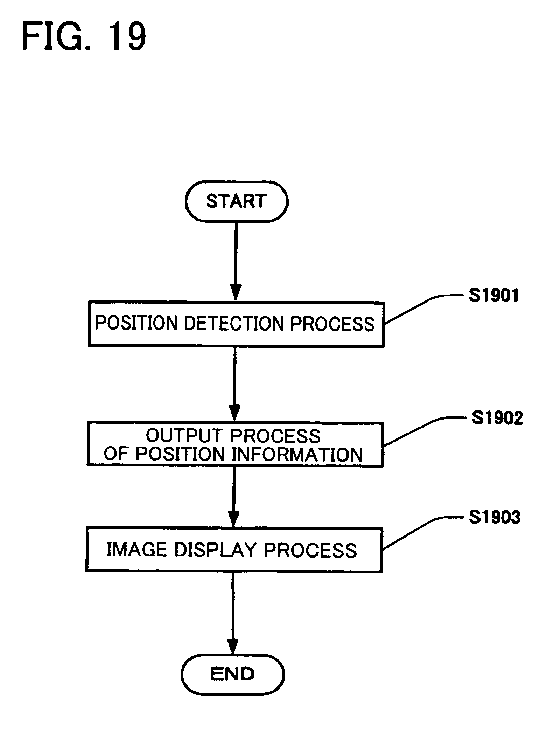

Fig. 19 is a flowchart showing operations executed in the gaming machine,

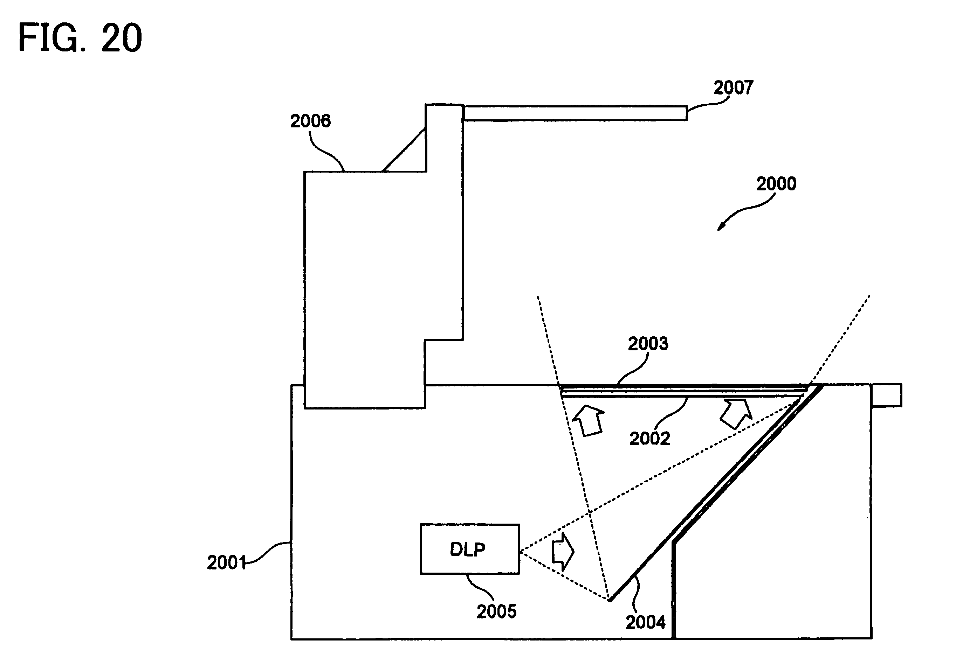

Fig. 20 is a schematic view showing an optical system constructing the gaming machine according to the third gaming machine embodiment,

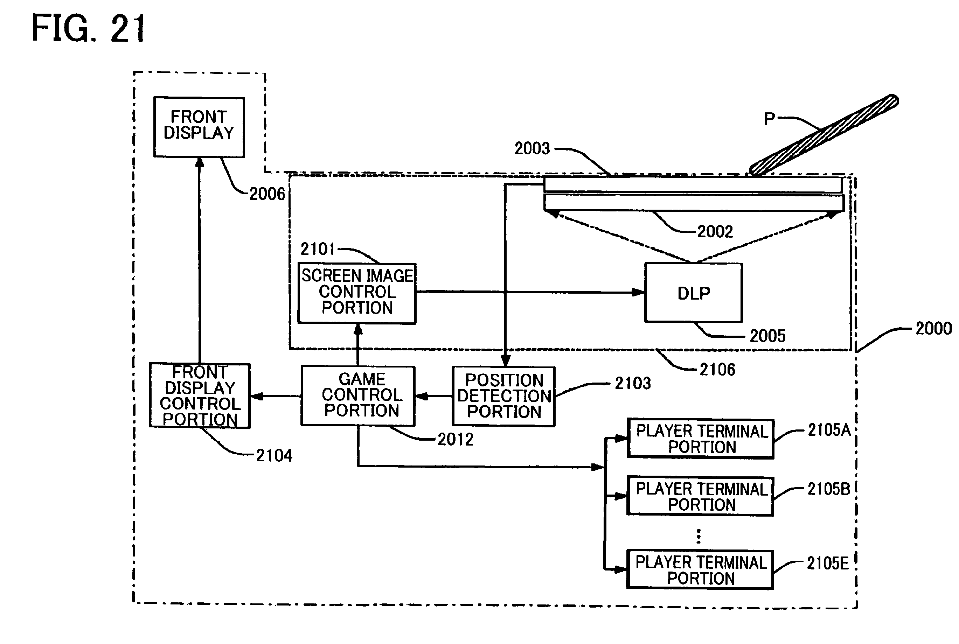

Fig. 21 is a block diagram showing an electrical construction of the gaming machine according to the third gaming machine embodiment, and

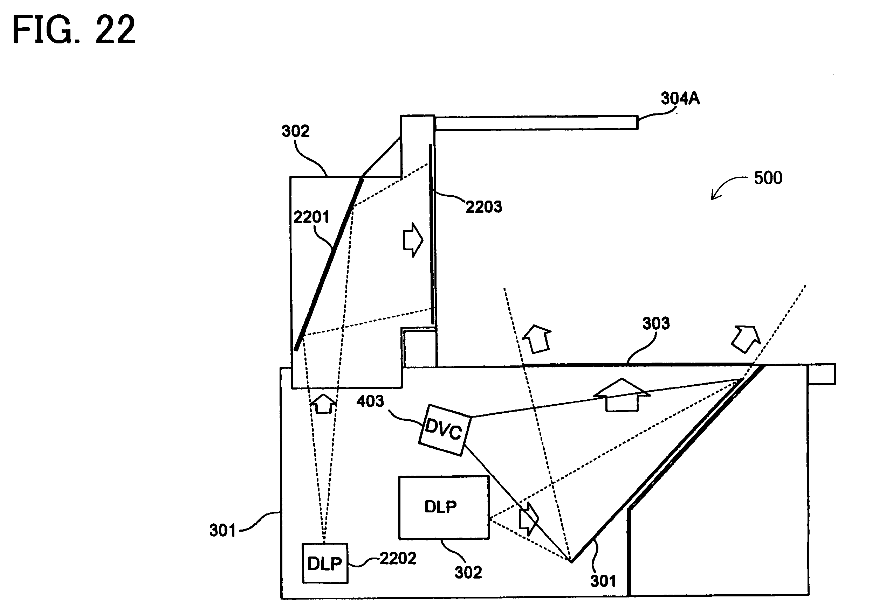

Fig. 22 is a schematic view showing another optical system constructing the gaming machine according to the first gaming machine embodiment.

### DETAILED DESCRIPTION OF THE PREFERRED EMBODIMENTS

Hereinafter, the embodiments embodying the present invention will be described with reference to the drawings.

### [First System Embodiment]

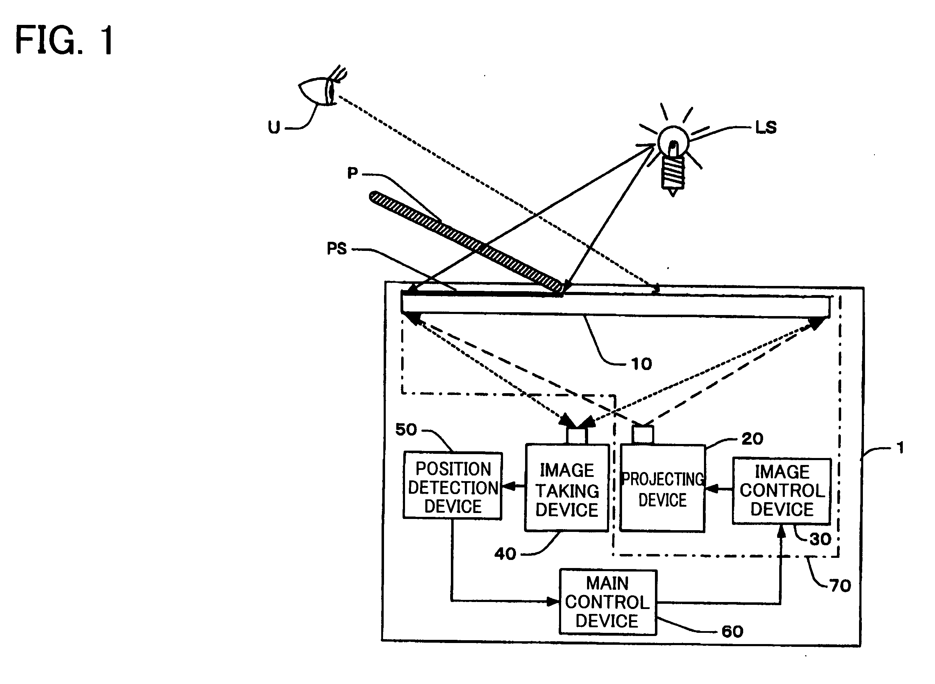

At first, the first system embodiment according to the present invention will be described with reference to Fig. 1. Fig. 1 is an explanatory view showing a basic construction of the image display system according to the first system embodiment of the present invention.

This image display system 1 is constructed from: a screen device 10 on which an image is focused; an image control device 30 for supplying image data; a projecting device 20 for projecting the image on the screen device 10 based on the image data supplied from the image control device 30; an image taking device 40 for taking a rear image of the screen device 10, the rear image being formed so as to include a shadow PS of an indication portion P; a position detection device 50 for receiving image data of the rear image of the screen device 10 output from the image taking device 40 and for determining the position of the shadow PS of the indication portion P based on the image data and outputting the position information; and a main control device 60 for transmitting to the image control device 30 the image to be projected on the screen device 10 through the projecting device 20, based on the position information output from the position detection device 50. The screen device 10, the projecting device 20 and the image control device 30 constructs an image display device 70 to display the image for a user U.

The screen device 10 has transparency, therefore light coming to both the front and rear planes can pass therethrough. The screen device 10 is, for example, a transparent screen for a liquid crystal projector. And when a user U sees the front plane of the screen device 10, the user U sees as if the optical image projected toward the rear plane of the screen device 10 by the projecting device 20 is focused on the screen device 10, as a result, the user U can see and recognize the image projected by the projecting device 20 corresponding to the image data.

The indication portion P is the indicating tool or means through which the user U indicates a desirable portion of the image displayed on the front plane of the screen device 10. For example, the indication portion P is the user's hands (including arms) or an indicating stick. The indication portion P is illuminated by a light source LS, thus the shadow PS of the indication portion P is seen on the screen device 10. Since the screen device 10 has transparency, the shadow can be seen on the rear plane of the screen device 10 when the user U sees the rear plane of the screen device 10. Here, the light source LS may be the natural light source such as the sun or may be an illumination device provided in the circumference that the image display system 1 is arranged or may be an illumination device such as a fluorescent tube arranged in the image display system 1.

The projecting device 20 is constructed from an optical projecting system which can project the optical image on the screen device 10 based on the image data. For example, the projecting device 10 is the liquid crystal projector (DLP (Digital Liquid crystal Projector)). Preferably, the light source LS is a light source which emits white light. And based on that white light passes through the screen device 10, the area in the shadow PS of the indication portion P is blackly seen on the rear plane of the screen device 10 and the area other than the shadow PS is whitely seen, therefore an image similar to the black and white image can be obtained.

The image taking device 40 is a device to produce image data of the rear plane of the screen device 10 and is, for example, constructed from a digital camera, a digital video camera, a CCD camera unit and the like.

The image control device 30 is a device having the position detection device 50, the main control device 60, a calculation processing device (CPU), a main memory (RAM), a read only memory (ROM), an input and output device (I/O) and an external memory device such as a hard disc device if necessary, and is, for example, constructed from an information process device such as a computer, a work station, a LSI chip and the like. And it is stored in the ROM or the hard disc device programs to operate the information process device as the image control device 30, the position detection device 50 or the main control device 60, and these programs are stored in the main memory and the CPU executes these programs, thereby the image control device 30, the position detection device 50 or the main control device 60 are realized by the information process device. Further, it is not necessary to store the above programs in the memory device provided in the information process device, and the programs may be provided from the external device (for example, a server of ASP (Application Service Provider) and the provided programs may be stored in the main memory.

The image control device 30, the position detection device 50 and the main control device 60 may be realized by an individual information process device, respectively and one information process device may function as the image control device 30, the position detection device 50 and the main control device 60.

The image control device 30 stores plural image data to show to the user U and reads out the necessary image data corresponding to the instruction from the main control device 60. Further, the image control device 30 conducts image process if necessary and provides the image data to the projecting device 20.

The position detection device 50 receives the image data of the rear plane in the screen device 10 output from the image taking device 40 and conducts the image process necessary for the above image data, thereby the position detection device 50 detects the position of the shadow PS of the indication portion P and outputs such detected position data as the position information. As the image process, there exist a threshold process to extract the area of the shadow SP and an edge process to extract an outline of the shadow PS. The position detection device 50 produces the position information of the shadow PS by utilizing the area of the shadow PS obtained by the edge process and the coordinate position information of pixels of the outline.

The main control device 60 has function to wholly control operation of the image display system 1 and instructs the timing to output which image data to the image control device 30 and transmits the instruction to change the image data to the image control device 30 corresponding to the position information of the shadow PS from the position detection device 50.

### [Modification of the First System Embodiment]

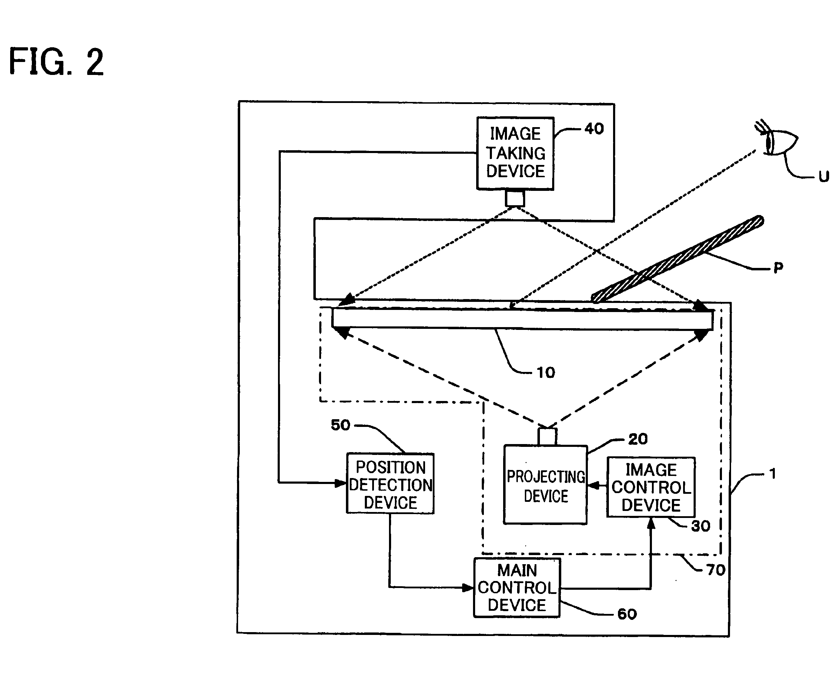

A modification of the image display system 1 shown in Fig. 1 is indicated in Fig. 2. Although an image of the position of the indication portion P is taken from a lower side of the screen device 10 in the system shown in Fig. 1 and the position is detected by utilizing the image including the shadow of the indication portion P, the position of the indication portion P is detected by disposing the image taking device 40 at an upper position of the screen device 10 and by directly taking the image of the indication portion P through the image taking device 40, in the modification shown in Fig. 2. That is to say, the image display system 1 according to the modification has a construction that the position of the indication portion P is detected by using a real image of the indication portion P instead of the shadow thereof. The image display system 1 can be also realized according to the above construction.

### [Second System Embodiment]

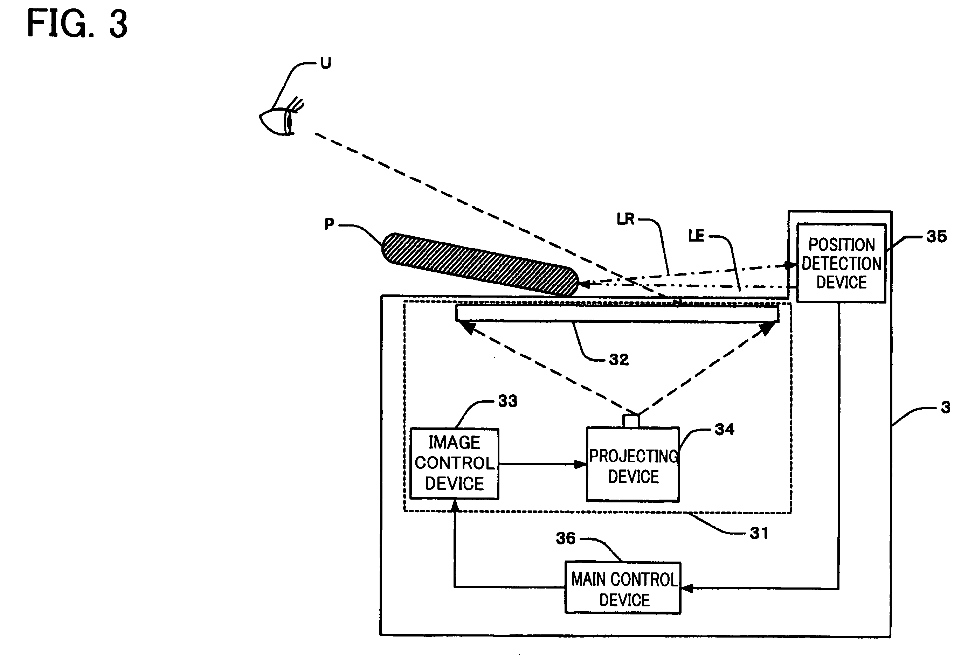

The second system embodiment according to the present invention will be described with reference to Fig. 3. Fig. 3 is an explanatory view showing a basic construction of the image display system according to the second system embodiment of the present invention.

This image display system 3 is constructed from: a screen device 32 constructing a part of an image display device 31; a projecting device 34 for projecting the image on the rear plane of the screen device 32 based on an image control device 33 for supplying the image data and the image data from the image control device 33; a position detection device 35 for detecting the position of the indication portion P by emitting light LE along the front plane of the screen device 32 and receiving light LR reflected by the indication portion P which is an object that the position thereof is to be measured; and a main control device 36 for transmitting to the image control device 33 the image to be projected on the screen device 32 based on the position information from the position detection device 35. The screen device 32, the projecting device 34 and the image control device 33 constructs the image display device 31 to display the image for the user U.

Here, the screen device 32, the image control device 33, the projecting device 34 and the main control device 36 are as same as the screen device 10, the image control device 30, the projecting device 20, the main control device 60 in the first system embodiment mentioned above, respectively, therefore explanation thereof will be omitted.

The position detection device 35 in the second system embodiment emits the light LE with directivity (emitted light) along the front plane of the screen device 32 so that the light LE is scanned over the front plane of the screen device 32 and receives the light LR which is the light formed when the light LE is reflected by the indication portion P and returned toward the position detection device 35. The position detection device 35 calculates the direction of the indication portion P against the position detection device 35 and the distance between the indication position P and the position detection device 35, based on both emitting direction of the light LE and light quantity of the light LR. Further, the position detection device 35 has function to obtain the position of the indication portion P on the basis of the above direction and the distance and to output the position information of the indication position P.

### [Third System Embodiment]

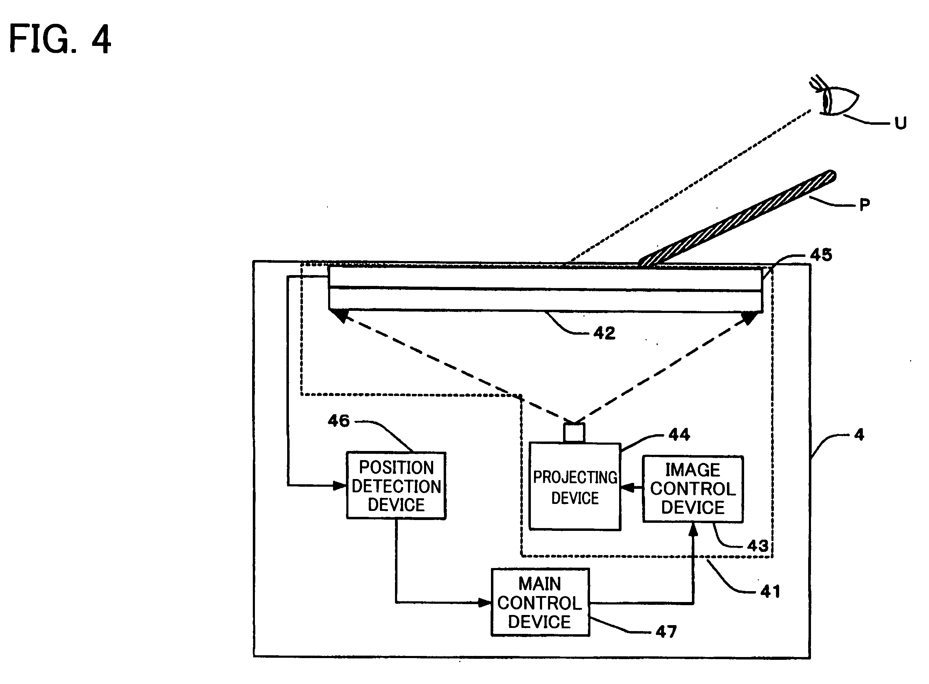

Next, the third system embodiment according to the present invention will be described with reference to Fig. 4. Fig. 4 is an explanatory view showing a basic construction of the image display system according to the third system embodiment of the present invention.

This image display system 4 is constructed from: a screen device 42 constructing a part of an image display device 41; a projecting device 44 for projecting the image on the rear plane of the screen device 42 based on an image control device 43 for supplying the image data and the image data from the image control device 43; a contact sensor 45 for detecting a contact position of the indication portion P; a position detection device 46 for producing the position information indicating the contact position of the indication portion P based on the output from the contact sensor 45; and a main control device 47 for transmitting to the image control device 43 the image to be projected on the screen device 42 based on the position information from the position detection device 46. The screen device 42, the projecting device 44 and the image control device 43 constructs the image display device 41 to display the image for the user U.

Here, the screen device 42, the image control device 43, the projecting device 44 and the main control device 47 are as same as the screen device 10, the image control device 30, the projecting device 20, the main control device 60 in the first system embodiment mentioned above, respectively, therefore explanation thereof will be omitted.

According to the first to third system embodiments, since the screen devices 10, 32, 42, each of which does not bend with its weight and produce calorific power when driven and consume electric power, are utilized as a so-called table screen, it can be provided the gaming machine having the table screen with a large image plane, in comparison with the gaming machine utilizing the liquid crystal display or the CRT monitor.

Next, gaming machine embodiments according to the present invention will be described.

### [First Gaming Machine Embodiment]

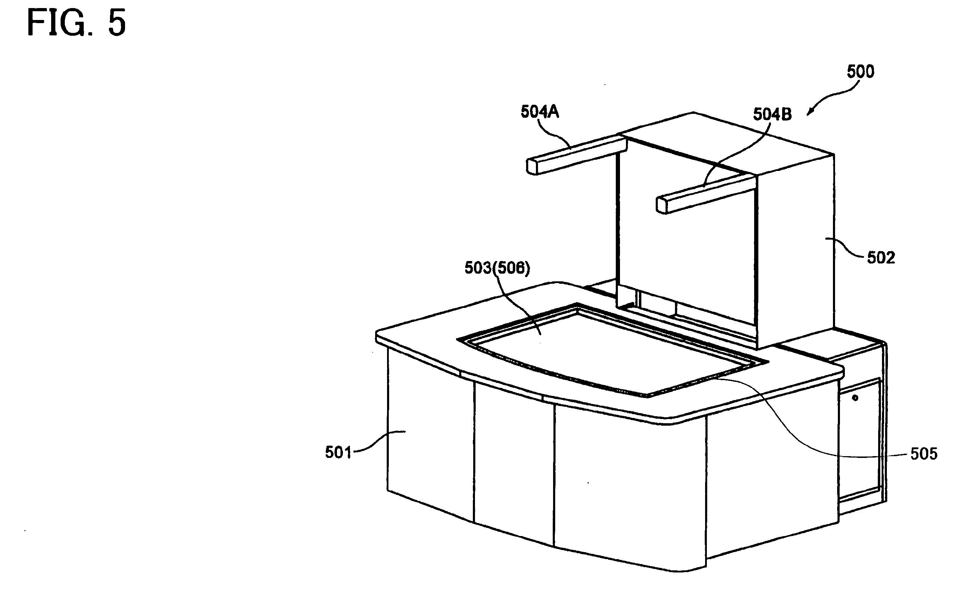

Fig. 5 is a perspective view showing a gaming machine utilizing the image display system 1 of the present invention. Here, although the gaming machine is explained as a device that the user U plays a baccarat game, the gaming machine according to the concrete embodiment can correspond to various games such as a poker game, a black jack game, a bridge game, a roulette game, for which the image display system 1 of the present invention can be adopted, in addition to the baccarat game.

The gaming machine 500 has a table portion 501 and a front display portion 502 disposed on the table portion 501 at a back side thereof.

The table portion 501 stores the optical system and the information process devices constructing the image display system 1 therein. On an upper central position of the table portion 501, an opening is formed and a transparent screen 503 constructing the screen device 10 is arranged in the opening. The transparent screen 503 functions as an upper display (hereinafter, abbreviated as "table screen 506), which constructs a part of the image display device 70 to display game image for the user U. Here, an upper plane of the transparent screen 503 is covered and protected by a transparent plate member such as a glass panel and the like, thus the transparent screen 503 is not broken and soiled even if the player touches the upper display by hands which become the indication portion P.

At both upper sides of the front display portion 502, luminescent tubes 504A, 504B as the light source LS are arranged, thereby the shadow SP of the indication portion P is reflected on the transparent screen 503. Here, it is not necessary to arrange the luminescent tubes 504A, 504B according to the state indicated in Fig. 5 and the luminescent tubes 504A, 504B may be arranged at any positions so long as the shadow PS of the indication portion P is reflected on the transparent screen 503. And if illumination devices are arranged in a place where the gaming machine 500 is installed so that the shadow PS of the indication portion P is reflected on the transparent screen 503, there is no problem if the luminescent tubes 504A, 504B are not provided.

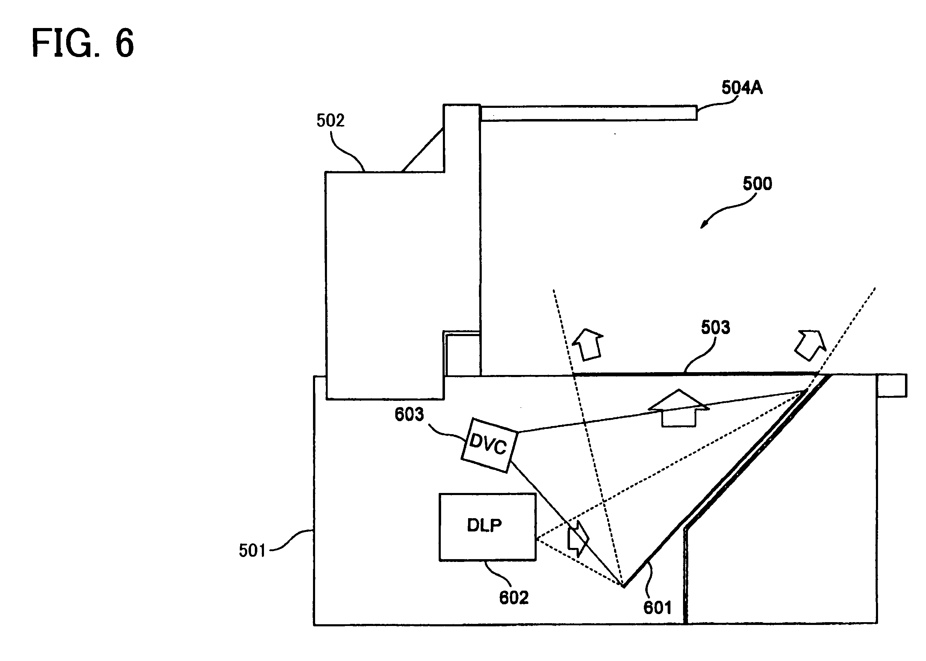

Fig. 6 is an explanatory view showing an example that an optical system constructing the image display system 1 is arranged, the image display system 1 being installed within the table portion 501.

At the central position of the table portion 501, the transparent screen 503 is fixed while being protected by the glass plate. Under the transparent screen 503, a mirror 601 is arranged in an oblique state. At a position facing to the mirror 601, a digital liquid crystal projector (abbreviated as "DLP" hereinafter) 602 and a digital video camera (DVC) 603 corresponding to the image taking device 40 are fixed. The mirror 601 reflects the image projected from the DLP 602 toward the transparent screen 503. Both the distance to the DLP 602 and the angle of reflection plane of the mirror 601 are adjusted so that the reflected image is projected with a desirable size. Similarly, the mirror 601 reflects the image of the rear plane of the transparent screen 503 toward the digital video camera 603. The distance to the digital video camera 603 and the angle of reflection plane of the mirror 601 against the transparent screen 503 / the digital video camera 603 are adjusted so that the digital video camera 603 can take the image of the rear plane of the transparent screen 503.

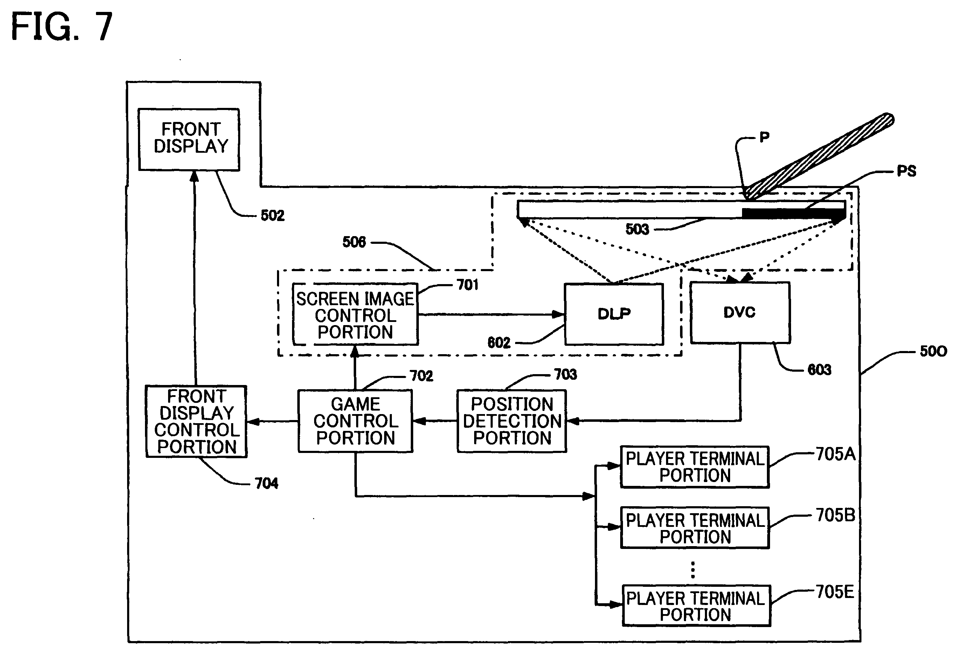

Next, the electrical construction of the gaming machine 500 will be described. Fig. 7 is a block diagram showing the electrical construction of the gaming machine 500.

As shown in Fig. 7, the transparent screen 503 is provided in the gaming machine 500. The DLP 602 corresponding to the projecting device 20 optically projects the image concerning with the game on the transparent screen 503. A screen image control portion 701 corresponding to the image control device 30 provides the image data (abbreviated as "first front plane image data" hereinafter) to the DLP 602. And the digital video camera 603 corresponding to the image taking device 40 takes the image of the rear plane of the transparent screen 503 and outputs the image data (abbreviated as "rear plane image data" hereinafter) obtained by taking the image of the rear plane of the transparent screen 503. The position detection portion 703 corresponding to the position detection device 50 processes the rear plane image data, thereby detects the position indicated by the indication portion P and outputs the position information. A game control portion 702 corresponding to the main control device 60 has function to control operation of the gaming machine 500. And the game control portion 702 instructs the timing to output which first front plane image data to the screen image control portion 701 and receives the position information from the position detection portion 703, further the game control portion 702 controls the gaming machine 500 based on the position information.

A front display control portion 704 outputs the image data (abbreviated as "second front plane image data" hereinafter) of the image displayed on the front display portion 502, corresponding to the instruction from the game control portion 702. The front display portion 502 receives the second front plane image data and displays thereon. The image displayed on the front display portion 502 informs a game state and a progressing state of the game to the user U, in cooperation with the image displayed on the transparent screen 503.

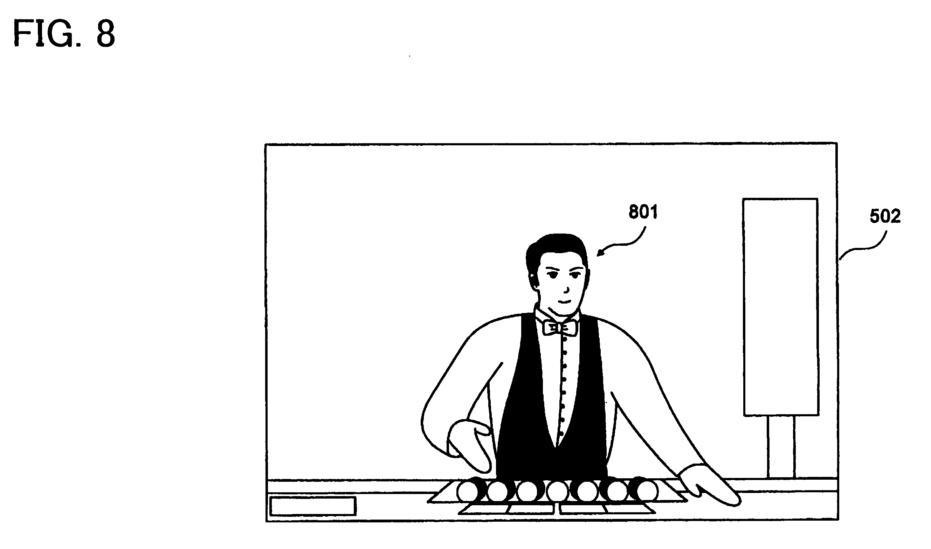

According to the embodiment, a dealer of the baccarat game is displayed on the front display portion 502 with a moving image. Fig. 8 is an image example displayed on the front display portion 502. In the image, the dealer of the baccarat game is displayed and it is displayed a state that distribution of cards, draw and delivery of chips by the dealer are displayed, thereby it is done the direction as if the player actually plays the baccarat game with the dealer.

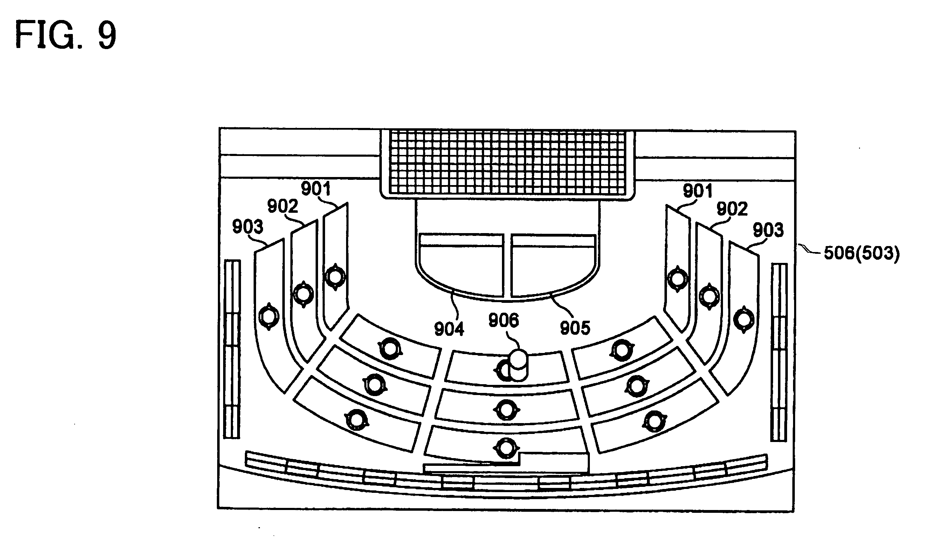

Next, an image example displayed on the table screen 506 (transparent screen 503) will be shown in Fig. 9. Fig. 9 is an explanatory view showing an image example displayed on the table screen 506 (transparent screen 503) of the gaming machine 500. In this embodiment, it is shown an image schematically showing of a baccarat table on the table screen 506. In the baccarat table shown in the example, areas 901, 902 and 903 to bet for "BANKER", "PLAYER" and "DRAW" respectively are displayed for each of five players. When the player points any of the areas 901, 902 and 903 by his or her hand as the indication portion P, it is input to the gaming machine 500 that the player bets for any of "BANKER", "PLAYER" and "DRAW". Here, chip number / money / credit number to be betted can be determined by the player through bet buttons arranged on a player terminal portion 705. And a pile 906 of chips belong to the player is displayed on the table screen 506, and when the player points any of "BANKER", "PLAYER" and "DRAW" by the indication portion P, the image is changed so that chips corresponding to the chip number betted to any of the areas 901, 902 and 903 are moved to any of the areas 901, 902 and 903 from the pile 906 of chips.

And on the table screen 506, it is displayed areas 904 and 905 to which the dealer distributes cards of "BANKER", "PLAYER" and card images are displayed on the areas 904, 905.

Returning to Fig. 7, the electrical construction of the gaming machine 500 will be described.

A plurality of player terminal portions 705A - 705N are connected to the game control portion 702. Each of the player terminal portions 705 has bill validation function and bet input function. Here, the bill validation function is function that coins, bills, prepaid card, credit card are received from the player and these are dealt as the credit (medal / coin) used in the gaming machine 500 and further payout of the credit (medal / coin), which the player owns at the time that payout instruction is done by the player, is conducted corresponding to the player's payout instruction. And the bet input function is function that the bet number / money / the credit number in the game are determined. The player conducts the game through the player terminal portion 705 and the indication portion P.

Next, it will be described detection process that the player's hand as the indication portion P is detected from the rear plane image data of the rear plane in the transparent screen 503.

Fig. 10 (A) shows an image example obtained by taking the image of the rear plane in the transparent screen 503 through the mirror 601 by the video camera 603, in a state that the shadow PS of the indication portion P is not displayed on the transparent screen 503. The video camera 603 is adjusted so as to take not only the image of the transparent screen 503 but also the image of circumference portion 1000 enclosing the transparent screen 503. The circumference portion 1000 corresponds to, for example, a fixing frame to fix the transparent screen 503 to a ceiling plate of the table portion 201. It is preferable that the color of the circumference portion 1000 is colored in black color or dark color near black color.

When the player sees with naked eyes, there will be a case that the image displayed on the front plane of the transparent screen 503 shown in Fig. 9 can be seen from the rear plane of the transparent screen 503. Thus, the exposure of the video camera 603 is adjusted and set so that the image displayed on the front plate of the transparent screen 503 becomes white and disappears from the transparent screen 503. Here, in a case that the video camera 603 has automatic exposure adjusting function, the exposure is adjusted corresponding to the circumference portion 1000 colored in black color or dark color near black color, therefore the image displayed on the front plane of the transparent screen 503 can be automatically removed even if exposure adjustment is not especially done.

Fig. 10 (B) shows an image example obtained by taking the image of the rear plane in the transparent screen 503 through the mirror 601 by the video camera 603, in a state that the shadow PS of the indication portion P is reflected on the transparent screen 503. In this image, the shadow PS of the hand as the indication portion P exists on the transparent screen 503. In this image example, the shadow PS comprises a complete shadow PS1 with dark color and a half shadow PS2 with thin color. The complete shadow PS1 and the half shadow PS2 are produced due to difference of distance to the transparent screen 503. Here, the shadow of the top portion of the hand (top side of the hand) exists closer to the transparent screen 503 and becomes the complete shadow PS1. And the shadow of the rear portion of the hand (arm side of the hand) separates from the transparent screen 503 and becomes the half shadow PS2. On the basis of difference between the complete shadow PS1 and the half shadow PS2, the top of the indication portion P can be determined.

Fig. 11 is a flowchart of the position detection process in which the position detection of the indication portion P is done by utilizing the rear plane image data.

At first, it is executed the process for taking the rear plane image of the transparent screen 503 (step S1101). That is to say, the video camera 603 takes the rear plane image of the transparent screen 503 through the mirror 603 and outputs the image shown in Fig, 10 (B) as the rear plane image data to the position detection portion 703.

Receiving the rear plane image data, the position detection portion 703 executes a binarization process of the rear plane image data (step S1102. Fig. 10 (C) is a conceptual view when the rear plane image data are displayed after the binarization process is done. In the shadow PS of the indication portion P, the thin shadow like the half shadow PS2 is removed and the top area of fingers is remained, accordingly it becomes very clear the position to which the indication portion P points. When the binarization process is conducted, a threshold value is voluntarily set so that the top of the indication portion P is specified. An optimum value of the threshold varies corresponding to circumstance (brightness of illumination device) around the gaming machine 500, therefore it is preferable to seek the optimum value of the threshold after the gaming machine 500 is installed and a trial run of the gaming machine 500 is done.

Next, the position detection portion 703 executes the position detection process based on the rear plane image data after the binarization process is done (step S1103). Concretely, the position detection portion 703 obtains the coordinate values (x, y values) of the pixels having black values based on the rear plane image data after the binarization process is done and produces the position information based on the coordinate values. The position information may be the coordinate value of the pixel corresponding to the summit of the top area. Or the mean value or central value of the coordinate values of all pixels having the black values may be selected as the position information.

Lastly, the position detection portion 703 outputs the position information produced in step S1103 to the game control portion 702 (step S1104). The game control portion 702 conducts a necessary game process based on the position information received. For example, the game control portion 702 determines the position information as pointing of any of the areas 901, 902 and 903 to bet to "BANKER", "PLAYER" or "DRAW", and conducts control so that the image of the pile 906 of chips designated is displayed.

As mentioned in the above, it can be realized the gaming machine 500 in which the transparent screen 503 as the screen device 10 is utilized as both the image display device and the input device.

A modification of the gaming machine 500 is shown in Fig. 12. In this modification, the video camera 603 takes the image including a real image of the indication portion P from an upper position of the table screen 506, in stead of the shadow of the indication portion P, and the position detection portion 703 determines the position indicated by the indication portion P based on the real image. Other constructive elements and operation are as same as those of the gaming machine 500 shown in Fig. 7.

### [Second Gaming Machine Embodiment]

Next, the second gaming machine embodiment according to the present invention will described.

Fig. 13 is a perspective view showing a gaming machine utilizing the image display system 3 of the present invention. Here, although the gaming machine is explained as a device that the user U plays a baccarat game, the gaming machine according to the second gaming machine embodiment can correspond to various games such as a poker game, a black jack game, a bridge game, a roulette game, a soccer game, an American football game, RPG, an action game, for which the image display system 3 of the present invention can be adopted, in addition to the baccarat game.

The gaming machine 1300 according to the second gaming machine embodiment has a table portion 1301 and a front display portion 1302 disposed on the table portion 1301 at a back side thereof.

The table portion 1301 stores the optical system and the information process devices constructing the image display system 3 therein. On an upper central position of the table portion 1301, an opening is formed and a transparent screen 1303 constructing the screen device 32 is arranged in the opening. The transparent screen 1303 functions as an upper display (hereinafter, abbreviated as "table screen 1306), which constructs a part of the image display device 31 to display game image for the player. Here, an upper plane of the transparent screen 1303 is covered and protected by a transparent plate member such as a glass panel and the like, thus the transparent screen 1303 is not broken and soiled even if the player touches the upper display by hands which become the indication portion P.

At both upper sides of the front display portion 1302, luminescent tubes 1304A, 1304B are arranged. Here, it is not necessary to arrange the luminescent tubes 1304A, 1304B according to the state indicated in Fig. 13 and the luminescent tubes 1304A, 1304B may be arranged at any positions. And if sufficient illumination devices are arranged in a place where the gaming machine 1300 is installed, there is no problem if the luminescent tubes 1304A, 1304B are not provided.

At a lower central position of the front display portion 1302, a sensor 1305 corresponding to the position detection device 35 is arranged. The sensor 1305 is constructed from, for example, a photoelectric sensor for detecting an obstacle object (for example, PB9 series produced by HOKUYO DENKI KABUSHIKIKAISHA located in OSAKA, JAPAN) or a laser sensor. The arrangement position of the sensor 1305 is not limited to the above position. For example, the sensor 1305 may be arranged at any position so long as the sensor 1305 emits scanning light along the front plane of the transparent screen 1303 and can scan over an upper side of the transparent screen 1303.

Fig. 14 is an explanatory view showing an example that an optical system constructing the image display system 3 is arranged, the image display system 3 being installed within the table portion 1301.

At the central position of the table portion 1301, the transparent screen 1303 is fixed while being protected by the glass plate. Under the transparent screen 1303, a mirror 1401 is arranged in an oblique state. At a position facing to the mirror 1401, a digital liquid crystal projector (abbreviated as "DLP" hereinafter) 1402 corresponding to the projecting device 34 is fixed. The mirror 1401 reflects the image projected from the DLP 1402 toward the transparent screen 1303. Both the distance to the DLP 1402 and the angle of reflection plane of the mirror 1401 are adjusted so that the reflected image is projected with a desirable size.

And on an upper plane of the table portion 1301, it is arranged the sensor 1305 which can scan over the upper side of the transparent screen 1303 by scanning light 1403.

Next, the electrical construction of the gaming machine 1300 will be described. Fig. 15 is a block diagram showing the electrical construction of the gaming machine 1300.

As shown in Fig. 15, the transparent screen 1303 is provided in the gaming machine 1300. The DLP 1402 corresponding to the projecting device 34 optically projects the image concerning with the game on the transparent screen 1303. A screen image control portion 1501 corresponding to the image control device 33 provides the image data (abbreviated as "first front plane image data" hereinafter) to the DLP 1402. The transparent screen 1303, the screen image control portion 1501 and the DLP 1402 constructs the table screen 1306 corresponding to image display device 31. The sensor 1305 corresponding to the position detection device 35 detects the position indicated by the indication portion P and outputs the position information. A game control portion 1502 corresponding to the main control device 36 has function to control operation of the gaming machine 1300. And the game control portion 1502 instructs the timing to output which first front plane image data to the screen image control portion 1501 and receives the position information from the sensor 1305, further the game control portion 1502 controls the gaming machine 1300 based on the position information.

A front display control portion 1504 outputs the image data (abbreviated as "second front plane image data" hereinafter) of the image displayed on the front display portion 1302, corresponding to the instruction from the game control portion 1502. The front display portion 1302 receives the second front plane image data and displays thereon. The image displayed on the front display portion 1302 informs a game state and a progressing state of the game to the player, in cooperation with the image displayed on the transparent screen 1303. In this example, the dealer 801 of the bacarrat game shown in Fig. 8 is displayed on the front display portion 1302 with moving image, similar to the first gaming machine embodiment.

The image displayed on the front display portion 1302 may be controlled by the position information detected through the sensor 1305. For example, the dealer 801 displayed on the front display portion 1302 is displayed so that he changes his face direction or body direction so as to exactly correspond to the position according to the position information.

On the table screen 1306, the image shown in Fig. 9 is displayed, similar to the first gaming machine embodiment. That is to say, it is shown an image schematically showing of a baccarat table on the table screen 1306. In the baccarat table shown in the example, areas 901, 902 and 903 to bet for "BANKER", "PLAYER" and "DRAW" respectively are displayed for each of five players. When the player points any of the areas 901, 902 and 903 by his or her hand as the indication portion P, it is input to the gaming machine 1300 that the player bets for any of "BANKER", "PLAYER" and "DRAW". Here, chip number / money / credit number to be betted can be determined by the player through bet buttons arranged on a player terminal portion 1505. And a pile of chips belong to the player is displayed on the table screen 1306, and when the player points any of "BANKER", "PLAYER" and "DRAW" by the indication portion P, the image is changed so that chips corresponding to the chip number betted to any of the areas 901, 902 and 903 are moved to any of the areas 901, 902 and 903 from the pile of chips.

Returning to Fig. 15, the electrical construction of the gaming machine 1300 will be described.

A plurality of player terminal portions 1505A - 1505N are connected to the game control portion 1502. Each of the player terminal portions 1505 has bill validation function and bet input function. Here, the bill validation function is function that coins, bills, prepaid card, credit card are received from the player and these are dealt as the credit (medal / coin) used in the gaming machine 1300 and further payout of the credit (medal / coin), which the player owns at the time that payout instruction is done by the player, is conducted corresponding to the player's payout instruction. And the bet input function is function that the bet number / money / the credit number in the game are determined. The player conducts the game through the player terminal portion 1505 and the indication portion P.

Next, process for detecting the position on the table screen 1306 indicated by the hand of the player will be described.

Fig. 16 (A) is a plan view when looking down the gaming machine 1300 and shows a state that the sensor 1305 arranged in the gaming machine 1300 scans over the upper side of the table screen 1306. And Fig. 16 (B) is a front view of the gaming machine 1300 corresponding to Fig. 16 (A).

The sensor 1305 emits scanning light so as to pass over the table screen 1306. And the sensor 1305 rotates the scanning light from right to left or from left to right so that the sensor 1305 becomes the center of rotation, thereby scans the entire area over the table screen 1306. For example, the sensor 1305 repeats emission of the scanning light and reception of the reflected light while rotating the emitting direction of the scanning light by an interval of 0.5 degrees.

In the embodiment, based on position detection by the sensor 1305, it can determine the player who indicates the position. In the gaming machine 1300, five stools 1601A - 1601 E are arranged so that the maximum five players can sit thereon. And the area that each player can reach is limited. At the front position of the player sitting on the stool, player terminal portions 1505A - 1505E assembled in the table portion 1301 are arranged. In each of the player terminal portions 1505A - 1505E, a bet button, a cancel button and a payout button (not shown) are provided. Through these buttons an input instruction by the player is accepted.

Areas 1602A - 1602E shown in Fig. 16 (A) show the areas within each of which the player can reach. For example, the area 1602A shows the area within which the player using the stool 1601A can reach. Within the area 1602A, if any position on the table screen 1306 is indicated by the player, the sensor 1305 determines that such position is indicated by the player using the stool 1601A. The sensor 1305 determines that the position is detected in which area of the areas 1602A - 1602E based on the emitting direction of the scanning light, and that the player corresponding to the detected area indicates the position. Thereafter, the sensor 1305 transmits the position information and the information (for example, player's number) to specify the player corresponding the position information to the game control portion 1502.

Fig. 17 shows a state that the player indicates the position in the area 1602B. The player indicates a position within the area 1602B on the table screen 1306 by the hand 1701 corresponding to the indication portion P. The sensor 1305 determines that the position is indicated by the player (the player sitting on the stool 1601B and using the player terminal portion 1505B), based on that the indicated position exists within the area 1602B. Fig. 18 shows a state that the player indicates the position within the area 1602C. The player indicates a position within the area 1602C on the table screen 1306 by the hand 1801 corresponding to the indication portion P. The sensor 1305 determines that the position is indicated by the player (the player sitting on the stool 1601C and using the player terminal portion 1505C), based on that the indicated position exists within the area 1602C.

According to the above method, it can be done that chip color (for example, red, blue, yellow, green, white) that each player uses is determined and such chip color is displayed in a place on the table screen 1306 indicated by the position information based on the detected position information.

Here, in the above embodiment, although it is constructed so that the entire area of the table screen 1306 is scanned by one sensor 1305, the present invention can be realized in a case that a plurality of sensors 1305 are provided and each of the sensors 1305 scans an area allotted on the table screen 1306. For example, it may be constructed that two sensors 1305 are provided and one sensor 1305 scans the right half area on the table screen 1306 and the other sensor 1305 scans the left half area on the table screen 1306.

According to the position detection method mentioned above, even if plural players indicate the positions on the table screen 1306 at the same time, each player corresponding to each of the indicated positions can be recognized.

Fig. 19 shows a flowchart of the position detection process for detecting the position indicated by the indication portion P through the sensor 1305.

At first, the sensor 1305 conducts the position detection process (step S1901). The sensor 1305 scans over the table screen 1306 by the scanning light and determines whether or not reflection of the scanning light exists. If the reflection of the scanning light exists, the sensor 1305 measures strength and light quantity of the reflected light and specifies the direction of the reflected light and the distance to the indication portion P, thereby conducts calculation about the position.

Next, the sensor 1305 outputs the calculated position as the position information (for example, x, y coordinate values) (step S1902). Here, the sensor 1305 may output both the position information and the discrimination information of the player (for example, player's number).

The position information is output to the game control portion 1502. The game control portion 1502 determines the image to be displayed on the table screen 1306 and / or the front display portion 1302, based on the position information received, and instructs the screen image control portion 1501, the DLP 302 and the front display control portion 1504 to conduct the image display process (step S1903). For example, if the game control portion 1502 determines the position information as indication of any of the areas 901, 902, 903 for betting "PLAYER", "BANKER", "DRAW", the game control portion 1502 instructs the screen image control portion 1501 to display chip image indicated within such areas, thereby the screen image control portion 1501 produces image data corresponding to the instruction.

As mentioned above, it can be realized the gaming machine 1301 in which the table screen 1306 is utilized for both the image display device and the input device.

### [Third Gaming Machine Embodiment]

Next, the third gaming machine embodiment according to the present invention will be described.

The third gaming machine embodiment is proposed as the gaming machine in which the image display system 4 according to the present invention is utilized. Here, the outline shape of the gaming machine according to the third gaming machine embodiment is as same as the gaming machine 500 according to the first gaming machine embodiment.

Fig. 20 is a schematic view showing an optical system constructing the image display system 4 which is installed in a table portion 2001 of a gaming machine 2000 according to the third gaming machine embodiment.

The gaming machine 2000 has the table portion 2001 and a front display portion 2006 disposed on an upper rear plane of the table portion 2001, and further a luminescent tube 2007 is provided so as to protrude from the front display portion 2006.

On the central position of the table portion 2001, a transparent screen 2002 corresponding to the screen device 42 is fixed in a state that the transparent screen 2002 is covered and protected by a touch panel sensor 2003 corresponding to the contact sensor 45. The touch panel sensor 2003 is set in the table portion 2001 so that the player can contact on voluntary place thereon by the indication portion P. The transparent screen 2002, the DLP 2005 and the screen image control portion 2101 cooperatively constructs the table screen 2106 which is the image display device 41 for displaying the image.

Under the transparent screen 2002 a mirror 2004 is arranged in an oblique state. At a position facing to the mirror 2004, it is fixed the digital liquid crystal projector (hereinafter, abbreviated as "DLP") 2005 corresponding to the projecting device 44. The mirror 2004 reflects the image projected from the DLP 2005 toward the transparent screen 2002. The distance between the mirror 2004 and the DLP 2005 and the angle of the reflection plane of the mirror 2004 are adjusted so that the image is projected with a desirable size.

Fig. 21 is a block diagram showing an electrical construction of the gaming machine 2000 according to the third gaming machine embodiment. The electrical construction of the gaming machine 2000 according to the third gaming machine embodiment is substantially as same as that of the second gaming machine embodiment except for a point that the touch panel sensor 2003 is utilized in stead of the sensor 1305. That is to say, the transparent screen 2002 is provided in the gaming machine 2000. The DLP 2005 optically projects the image concerning with the game on the transparent screen 2002. The screen image control portion 2101 corresponding to the image control device 43 supplies the image data (hereinafter, abbreviated as "first front plane image data") to the DLP 2005. The touch panel sensor 2003, the transparent screen 2002, the screen image control portion 2101 and the DLP 2005 constructs the table screen 2106 corresponding to the image display device 41. The position detection portion 2103 detects the position indicated by the indication portion P based on the output from the touch panel sensor 2003 and outputs the position information. The game control portion 2102 corresponding to the main control device 47 has function to control operation of the gaming machine 2000. And the game control portion 2102 instructs the timing to output which first front plane image data to the screen image control portion 2102 and receives the position information from the position detection portion 2103, further the game control portion 2102 controls the gaming machine 2000 based on the position information. The front display control portion 2104 outputs the image data (hereinafter, "second front plane image data") of the image displayed on the front display portion 2006.

Operation and merits of the gaming machine 2000 according to the third gaming machine embodiment are substantially as same as those of the gaming machines according to the first gaming machine embodiment and the second gaming machine embodiment.

### [Modification]

In the first to third gaming machine embodiments, the front display portion 502, 1302, 2006 can be constructed from the transparent screen and the liquid crystal projector. Fig. 22 is a schematic view showing an optical construction in which the front display portion in the gaming machine 500 according to the first gaming machine embodiment is constructed from the transparent screen and the liquid crystal projector.

In the construction shown in Fig. 22, in addition to the construction of Fig. 6, it is provided a second liquid crystal projector 2202 for the front display portion, a mirror 2201 for changing light path of the projected light from the liquid crystal projector 2202 and a transparent screen 2203 that the image is projected thereon by the projected light the light path of which is changed.

According to the above construction, the front display portion with a larger size can be provided with low cost and calorific power can be reduced.

The present invention may be adopted for all devices or systems in which the input acceptance by the user is done by utilizing the image displayed on the display device. For example, the present invention may be adopted for the image display system for presentation, the demonstration device for sales promotion, in addition to the gaming machine.

## Claims

1. A gaming machine comprising:
a projection means for projecting an image;
a screen means on which the image projected by the projection means is focused;
an instruction acceptance means for accepting an instruction; and
control means for controlling progress of a game based on the instruction accepted by the instruction acceptance means.

2. The gaming machine according to claim 1, wherein the projection means comprises a liquid crystal projector with a projection screen thereof, and
wherein the screen means comprises the projection screen of the liquid crystal projector.

3. The gaming machine according to claim 1, further comprising:
a light path change means disposed in a light path formed between the projection means and the screen means.

4. The gaming machine according to claim 3, wherein the light path change means comprises an optical device capable of changing a progressive direction of light in the image projected by the projection means.

5. The gaming machine according to claim 4, wherein the optical device comprises a mirror.

6. The gaming machine according to claim 1, further comprising:
a display means for displaying another image different from the image projected on the screen means.

7. The gaming machine according to claim 6, wherein the display means comprises a liquid crystal projector with a projection screen thereof.

8. The gaming machine according to claim 6, wherein the display means comprises a liquid crystal display.

9. The gaming machine according to claim 6, wherein the display means comprises a CRT monitor.

10. The gaming machine according to claim 1, wherein the instruction acceptance means has a first operation portion for accepting an instruction conducted by indicating the image projected on the screen and a second operation portion different from the first operation portion.

11. The gaming machine according to claim 10, wherein the instruction is conducted based on that a player indicates the image projected on the screen by a part of a player's body or an indication tool.

12. The gaming machine according to claim 11, wherein the first operation portion comprises a photoelectric sensor which scans light along an upper plane of the screen means and senses light reflected on the part of the player's body or the indication tool.

13. The gaming machine according to claim 11, wherein the first operation portion comprises a contact sensor disposed on the screen, the contact sensor sensing a position thereon contacted by the part of the player's body or the indication tool.

14. The gaming machine according to claim 13, wherein the contact sensor comprises a touch panel sensor.

15. The gaming machine according to claim 10, wherein the second operation portion comprises a terminal device provided in the gaming machine.
